# EUROPEAN PATENT APPLICATION

(11) **EP 4 763 311 A1**
(43) Date of publication of application: **24.06.2026**
(21) Application number: 25224611.1
(22) Date of filing: 17.12.2025
(51) Int. Cl.: B01D 53/02

(54) **PLANT AND METHOD FOR TREATING AN AERIFORM EFFLUENT**

(30) Priority: 18.12.2024 IT 202400028821
(71) Applicant: Laminam SpA, 41042 Fiorano Modenese (IT); RAFT S.r.l., 50056 Montelupo Fiorentino (FI) (IT)
(72) Inventor: BONARI, Simone, Montelupo Fiorentino (FI) (IT); PEROZZI, Michele Patrizio, Fiorano Modenese (MO) (IT)
(74) Representative: Cantaluppi, Stefano

(57) **Abstract**

A plant and method for treating an aeriform effluent, wherein the plant comprises a delivery conduit line (10) configured to transport an aeriform effluent (F) from a combustion station (20), to one or more processing stations arranged in succession, and at least one basification station (30) arranged along said delivery conduit line (10) and configured to perform a first basification of the aeriform effluent (F). The plant further comprises a first cooling station (40) arranged along said delivery conduit line (10) downstream of said basification station (30) and comprising at least one air heat exchanger (41) configured to perform a cooling of the aeriform effluent to a temperature not exceeding 75°C, and a second cooling station (50) arranged along said delivery conduit line (10) downstream of said first cooling station (40) and comprising at least one liquid heat exchanger (51) configured to perform a cooling of the effluent to a temperature not exceeding 50°C. The plant further comprises at least one adsorption station (60) arranged along said delivery conduit line (10) downstream of said second cooling station (50) and comprising at least one filter element (61) configured to perform an adsorption on the aeriform effluent.

## Description

### Technical area

The present invention relates to the field of treating aeriform fluids from industrial waste. More specifically, the invention relates to a plant and method for treating an aeriform effluent generated by a plant for the production of ceramic materials.

### Technological background

In the field of the treatment of aeriform fluids from discharges of industrial processing waste, various types of processes are known adapted to remove organic and/or inorganic contaminants from the fluids themselves, which is usually necessary prior to releasing these fluids into the atmosphere.

The term "effluent" refers to a fluid in which contaminants of an organic and/or inorganic nature are present.

The term "treatment of an aeriform effluent" refers to the process of removing at least part of the contaminants contained in an aeriform fluid from industrial processing waste.

With specific reference to the generation and subsequent release of an aeriform effluent from a ceramics manufacturing plant into the atmosphere, the type and quantity of pollutants it contains depend on various parameters, e.g. the raw materials used, the additives employed and the production methods applied.

These emissions typically include particulate and aeriform emissions such as carbon oxides, nitrogen oxides, sulphur oxides, chlorate and chlorinated inorganic compounds, hydrochloric acid (HCl) and phosphoric acid (HF), organic compounds and heavy metals.

Additionally, in this specific production sector, the aeriform effluent treatment system should take into account the consequences of both the type of fuel used (as heavy fuel oil, for example, produces large quantities of sulphur dioxide) and the type of raw material used in the plant's processes (e.g. different types of clay may contain high percentages of carbonates, marine sediments, sulphur compounds and, in some cases, feldspar containing fluorides).

The currently most widespread treatment plants for the removal of contaminants in aeriform effluents - also known as "regenerative thermal oxidisers" (RTO) - from ceramic material production plants, allow the removal of only one pollutant, total organic carbon (TOC), but are ineffective on all the inorganic components of the flue gas (sulphur, chlorine, fluorine) and are, moreover, producers of carbon dioxide that is added to that already produced by the ceramic kiln.

The need is therefore perceived for a plant and method for treating an aeriform effluent that allows one or more of the above limits to be exceeded with reference to the prior art mentioned above.

### Description of the invention

In particular, it is the purpose of the present invention to provide a plant and a method for treating an aeriform effluent, in particular generated by a plant for the production of ceramic materials, which allows the effluent to be purified efficiently.

A further purpose of the present invention is to provide a plant for the treatment of an aeriform effluent that can be easily configured and sized according to the type of effluent to be treated, as well as being overall more economical than plants of the prior art.

It is also the purpose of the present invention to provide a plant and a method for treating an aeriform effluent, which allows the abatement of all classes of contaminants to be easily planned and regulated.

Finally, the aim of the present invention is to provide a plant for treating an aeriform effluent, which can be adapted to the chemical and physical characteristics of the aeriform effluent subjected to the purification process, both at the design stage and during operation, for example during the purification process of the effluent itself.

These and other purposes of the present invention are achieved by means of an aeriform effluent treatment plant and a corresponding treatment method incorporating the features of the appended claims, which form an integral part of the present description.

According to a first aspect, the present invention relates to a plant for treating an aeriform effluent comprising a delivery conduit line configured to transport an aeriform effluent coming from a combustion station to one or more processing stations arranged in succession.

Preferably, the plant comprises at least one basification station arranged along said delivery conduit line and configured to perform a first basification of the aeriform effluent.

Preferably, the plant comprises a first cooling station, arranged along said delivery conduit line downstream of said basification station and comprising at least one air heat exchanger configured to perform a cooling of the aeriform effluent to a temperature not exceeding 75°C.

Preferably, the plant comprises a second cooling station arranged along said delivery conduit line downstream of said first cooling station and comprising at least one liquid heat exchanger configured to perform a cooling of the effluent to a temperature not exceeding 50°C.

Preferably, the plant comprises at least one adsorption station arranged along said delivery conduit line downstream of said second cooling station and comprising at least one filter element configured to perform an adsorption on the aeriform effluent.

This solution makes it possible to provide a plant in which the effluent purification treatment is highly efficient and the consumption of reagents and energy is proportional to the load of pollutants to be abated, unlike systems of the prior art (e.g. thermal oxidation) where this consumption is invariant to the load.

In a second aspect thereof, the present invention relates to a method for treating an aeriform effluent comprising perform at least one basification of the aeriform effluent by means of basifying agents in a basification station comprising one or more basification substations, said basification station being configured so as to obtain an at least partially de-acidified aeriform effluent flow, output from said basification station.

Preferably, the method comprises perform at least one first cooling operation in a first cooling station comprising at least one air heat exchanger, configured so as to obtain a first condensate fraction and a partially cooled aeriform effluent flow having a temperature not exceeding 75°C.

Preferably, the method comprises perform at least one second cooling operation in a second cooling station comprising at least one liquid heat exchanger, configured so as to obtain a second condensate fraction and a cooled aeriform effluent flow having a temperature not exceeding 50°C. Preferably, the method comprises perform at least one adsorption operation in an adsorption station comprising at least one filter element.

According to this solution, it is possible to provide an improved aeriform effluent treatment, as it is highly purified.

The present invention may have, in at least one of the aforesaid aspects, at least one of the following preferred features, taken individually or combined with any one of the other preferred features described.

Preferably, the air exchanger is configured to cool the aeriform effluent so as to obtain a cooled aeriform effluent outlet flow having a temperature comprised between about 40°C and about 70°C.

According to this configuration, it is possible to advantageously limit the energy consumption of the operations that will be carried out in the subsequent steps of the fluid treatment process, while avoiding the uncontrolled formation of aggressive condensates in the cooling station. In some embodiments, the plant comprises a control station arranged along the delivery conduit line downstream of said second cooling station and comprising an absolute humidity meter and/or temperature detector.

In some embodiments, the air heat exchanger provides an inlet for the inlet of an aeriform service fluid having a temperature less than or equal to 40°C. In some embodiments, the air heat exchanger provides an outlet for the outlet of said aeriform service fluid, which has a temperature comprised between 70°C and 90°C at said outlet.

In some embodiments, the liquid heat exchanger is supplied with a service fluid in the liquid state, which service fluid consist of either water, or of one or more glycols, or of a mixture of water and one or more glycols.

In some embodiments, the liquid heat exchanger is provided with an inlet for inlet of the service fluid in the liquid state having a temperature between 2°C and 10°C.

In some embodiments, the liquid heat exchanger is provided with an outlet for the outlet of said service fluid in the liquid state having a temperature between 10°C and 20°C at said outlet.

Preferably, the liquid heat exchanger of the second cooling station is configured to cool the effluent to a temperature comprised between 20°C and 30°C.

According to this configuration, it is advantageously possible to promote a massive condensation with a consequent reduction in the titre of inorganic and organic pollutants and carbon dioxide.

In particular, through air and liquid heat exchangers, it is possible to remove at least part of the carbon dioxide (CO₂) contained in the effluent being cooled. In fact, the removal process is governed by the phenomena of transport from the gas phase to the liquid phase and the liquid-gas equilibrium of CO₂ and is linked to the solubility of CO₂ in water, which, as is well known, increases with decreasing temperature.

In some embodiments, said basification station comprises at least one first basification substation comprising at least one bag filter.

Preferably, alkaline powder is employed in said bag filter.

In some embodiments, said alkaline powder comprises calcium hydroxide. In some embodiment, said alkaline powder comprises one or more bicarbonate salts.

In some embodiments, said first basification substation comprises at least a second liquid-based basification substation arranged downstream of said first basification substation.

In some embodiments, said second basification substation comprises one or more spray nozzles configured to spray a de-acidifying agent in liquid form onto said aeriform effluent.

In some embodiments, said de-acidifying agent in liquid form is an aqueous solution of KOH.

Preferably, such an aqueous KOH solution has a volume percentage composition of KOH between 0.5% and 8% by weight.

In some embodiments, said first cooling station comprises a first condensate separator.

In some embodiments, said second cooling station comprises a second condensate separator.

This configuration allows operation even at lower temperatures than the design temperature, as good protection against fouling and corrosion is achieved in the post-cooling station.

Preferably, said first condensate separator consists of a demister. Preferably, said second condensate separator consists of a demister.

In some embodiments, the plant comprises a heat exchanger supplied with service fluid and configured to perform a post-heating operation of the aeriform effluent and achieve a relative humidity of the aeriform flow at the inlet to the adsorption station comprised between 30% and 50%, preferably 40%.

Preferably, said heat exchanger is configured to increase the temperature of the effluent flowing through it by about 10°C.

This post-heating operation advantageously ensures maximum abatement efficiency of the adsorption section. In fact, thanks to the configuration of the sections that follow one another in the plant according to the invention, the average abatement efficiency of the adsorption section with respect to the pollutants present in the effluent flow to be treated is greater than 90%. In some embodiments, the method comprises measuring the absolute humidity of said cooled aeriform effluent flow and performing a regulation operation through a control station (70) of at least one of: the temperature of a liquid service fluid employed in the second cooling station, the temperature of an aeriform service fluid employed in the first cooling station, and the flow rate of the aeriform effluent entering the plant. Preferably, said control operation is carried out prior to perform at least one adsorption operation.

### Brief description of the drawings

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different figures are indicated by similar reference numerals, where appropriate.
Figure 1 illustrates a plant schema for treating an aeriform effluent, according to an embodiment of the present invention; and

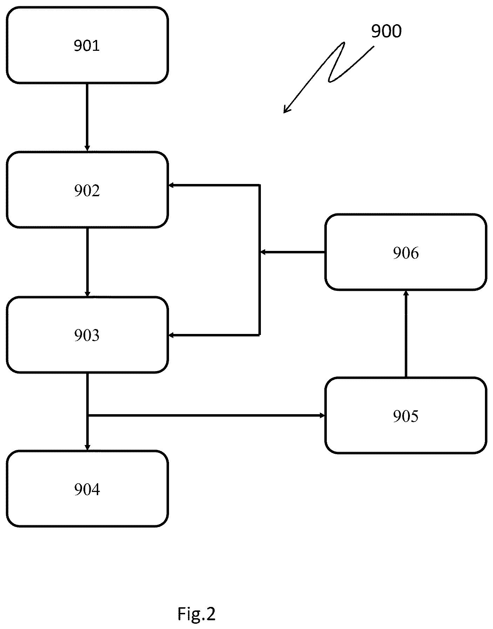

Figure 2 is a flowchart of a method for treating an aeriform effluent according to an embodiment of the present invention.

### Preferred embodiment of the invention

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "includes" means "includes, but not limited to", unless otherwise indicated.

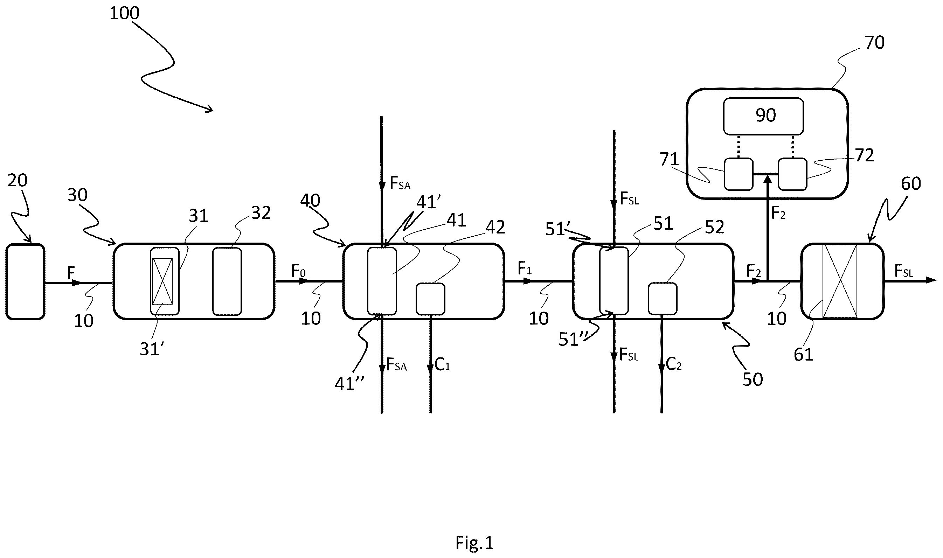

With initial reference to Figure 1, the number 100 indicates a plant 100 for treating an aeriform effluent according to the present invention, which receives an aeriform effluent flow F generated by a generic combustion station 20 belonging to said plant. Preferably, said aeriform effluent F is generated in a combustion station comprising one or more kilns for firing ceramic materials.

Generally, the temperature of the aeriform effluent F from the combustion station is comprised between 180°C and 220°C.

The variation in pollutant content depends on the type of processing carried out; the values for pollutants potentially present in the effluent F can be summarised in the following table N.1.

**TABLE N.1**

| | | |
|---|---|---|
| Water vapour volume | % | 3 ≤ x ≤ 10 |
| Temperature | °C | 160 ≤ x ≤ 230 |
| Particle material | mg/Nm³ | 5 ≤ x ≤ 10 |
| Lead | mg/Nm³ | ≤ 0.001 |
| Hydrofluoric acid (HF) | mg/Nm³ | 30 ≤ x ≤ 80 |
| Hydrochloric acid (HCl) | mg/Nm³ | 20 ≤ x ≤ 130 |
| V.O.S. (as total C-org) | mg/Nm³ | 10 ≤ x ≤ 150 |
| Aldehydes | mg/Nm³ | 4 ≤ x ≤ 60 |
| of which Formaldehyde | mg/Nm³ | 4 ≤ x ≤ 30 |
| Oxygen (O₂) | % | 14 ≤ x ≤ 18 |
| Carbon monoxide (CO) | mg/Nm³ | 80 ≤ x ≤ 200 |
| Carbon dioxide (CO₂) | % | 3 |
| Nitrogen oxides (as NO₂) | mg/Nm³ | 25 ≤ x ≤ 60 |
| Sulphur oxides (as SO2) | mg/Nm³ | 40 ≤ x ≤ 300 |
| Ammonia (NH₃) | mg/Nm³ | ≤ 5 |
| PCDD-PCDF | mg/Nm³ | < 0.1 |
| Odour concentration | UO/m³ | 1,000 ≤ x ≤ 6,000 |

The plant 100 comprises a delivery conduit line 10 configured to transport the aeriform effluent F from the combustion station 20 to several processing stations forming part of the plant and arranged in succession, which are affected sequentially by the passage of the flow of aeriform effluent F to be treated.

In particular, the plant 100 comprises a basification station 30, arranged along said delivery conduit line 10 and served by it, configured to perform a first basification operation of the aeriform effluent F.

In such a basification station 30, treatment can be carried out to correct the acidity of the aeriform effluent F through one or more substations arranged in series.

According to a first embodiment, the basification station 30 comprises at least a first basification substation 31 employing alkaline powder as a de-acidifying agent. Preferably, said first basification substation 31 comprises a bag filter 31'.

According to an alternative embodiment, the first basification station 30 comprises a second liquid-based basification substation 32, which comprises one or more spray nozzles (not shown in the figures) configured to spray a de-acidifying agent in liquid form onto the aeriform effluent F flowing inside the second substation 32 itself.

In a preferred embodiment, the second basification substation 32 is used in combination with said first basification substation 31 and is arranged downstream of the latter.

Preferably, the de-acidifying agent in liquid form used in the second basification substation 32 is an aqueous solution of potassium hydroxide (KOH), preferably having a volume percentage composition of KOH comprised between 0.5% and 5% by weight. The use of this type of solution, also known as caustic potash, advantageously avoids the common ion phenomenon due to the presence of fluorine in the effluent to be treated. Preferably, the basification station 30 is configured to obtain a flow of at least partially de-acidified aeriform effluent F₀ at the outlet from the basification station itself.

Generally, the temperature of the aeriform effluent F coming from the combustion station is comprised between 180°C and 220°C and the temperature of the at least partially de-acidified aeriform effluent F₀ leaving the basification station 30 is generally about 5-10°C lower than the temperature of the aeriform effluent F coming from the combustion station. The plant 100 further comprises a first cooling station 40 - arranged along the delivery conduit line 10 and downstream of said basification station 30 - towards which the at least partially de-acidified aeriform effluent flow F₀ is conveyed. Said first cooling station 40 comprises at least one air heat exchanger 41 configured to perform cooling of the at least partially de-acidified aeriform effluent F₀ flowing therein.

According to a preferred embodiment, the air exchanger 41 comprises an inlet section 41' and a first outlet section 41", connected to each other by means of internal shell-and-tubes (not shown in the figures) through which an aeriform service fluid F_{SA} flows, suitable for cooling the at least partially de-acidified aeriform effluent F₀ flowing within the exchanger 41 itself and lapping said shell-and-tubes.

Preferably, the aeriform service fluid F_{SA} consists of ambient air having, at the inlet section 41' of the air heat exchanger 41, a temperature comprised between 10°C and 40°C, preferably about 20°C.

Preferably, the air heat exchanger 41 is configured so that the temperature of the aeriform service fluid F_{SA} measured at the outlet section 41" of the air heat exchanger is comprised between 70°C and 90°C.

In alternative embodiments, said aeriform service fluid F_{SA} can consist of water from a cooling tower or drycooler.

The first cooling station 40 is configured to cool the at least partially de-acidified aeriform effluent F₀ so as to obtain a partially cooled aeriform effluent flow F₁ at the outlet, having a temperature not exceeding 75°C. Preferably, the first cooling station 40 is configured to obtain a partially cooled aeriform effluent flow F₁ at the outlet, having a temperature comprised between about 40°C and about 70°C.

The air exchanger 41 preferably also comprises a first condensate separator 42; preferably said first condensate separator 42 consists of a demister.

Downstream of the first cooling station 40, the plant comprises a second cooling station 50, which is also served by the delivery conduit line 10; this second cooling station 50 comprises at least one liquid heat exchanger 51 configured to perform a cooling of the partially cooled aeriform effluent F₁ coming from the first cooling station 40.

According to a preferred embodiment, the second cooling station 50 is configured to cool the partially cooled aeriform effluent F₁ so as to obtain a flow of cooled aeriform effluent F₂ at the outlet from the second cooling station itself, having a temperature not exceeding 50°C, preferably comprised between about 20°C and about 30°C.

According to a preferred embodiment, the liquid heat exchanger 51 is supplied with a service fluid in the liquid state F_{SL} which may be water, or one or more glycols, or a mixture of water and one or more glycols. Preferably, the liquid heat exchanger 51 is provided with an inlet 51' for the input of the service fluid in the liquid state F_{SL} having a temperature comprised between 2°C and 7°C, preferably about 5°C, and an outlet 51" for the output of the service fluid in the liquid state F_{SL}, having a temperature comprised between 10°C and 15°C at said outlet 51".

The liquid heat exchanger 51 also preferably comprises a second condensate separator 52; preferably said second condensate separator 52 consists of a demister.

In a preferred embodiment, the first condensate separator 51 and the second condensate separator 52 comprise an inverted cyclone and a polypropylene inertial vane type separator (demister), for condensate separation.

The demister containment casing is connected, together with a condensate drain from said cyclone, to an underground reservoir, which is designed to contain acidic condensate and equipped with a booster pump.

For each of the lines, downstream of the cyclone/demister, an additional subcooling heat exchanger, equipped with a suitable chiller, in which glycol water in a suitable flow rate will circulate, can also be advantageously provided.

Preferably, a heat exchanger fed with service fluid (e.g. hot water, preferably at a temperature of about 80°C) is installed downstream of the aforementioned demister in order to perform a "post-heating" operation of the aeriform effluent by about 10°C and achieve a relative humidity of the aeriform flow at the inlet to a subsequent adsorption station 60 comprised between 30% and 50%, preferably 40%.

The plant 100 thus further comprises at least one adsorption station 60 arranged along the delivery conduit line 10, downstream of the second cooling station 50. Such an adsorption station 60 comprises at least one filter element 61 configured to perform an adsorption operation on the aeriform effluent.

The adsorption station 60 can be suitably configured according to both the flow rate of the aeriform effluent to be treated, and the concentration values of contaminants contained in the effluent itself, and the desired concentration limit values of contaminants present in the aeriform effluent to be released into the atmosphere. The pollutants reduced by this section are those with an organic component - generally not water-soluble - not treated in the previous sections.

Such an adsorption station 60 may, for example, provide for the use of several filter elements 61 the number of which may be determined during the plant design phase, e.g. on the basis of the various process parameters mentioned above.

In detail, the adsorption station 60 is kept under vacuum by centrifugal fans, which ensure suitable negative pressure and flow conditions, upstream of the filter elements 61.

The fans and the geometry of the filter elements 61 ensure uniform distribution in the adsorption cells, which are loaded, according to the needs of the pollutant load to be abated, with activated carbon or Zeolites. Preferably, the filter elements 61 consist of cylindrical multilayer fixed-bed filters, and an inlet of the aeriform effluent is provided in a direction orthogonal to said filters, and an internal distribution system with a decreasing cross-section, e.g. toroidal in shape.

The aeriform effluent flows into the adsorption station 60 due to the vacuum applied by one or more fans, as well as the geometry, and is evenly distributed within it as it passes through the filter elements 61.

According to the invention, a variable number of cartridges comprising different filter elements 61 can be provided; this system allows high abatement yields to be achieved and offers the possibility of independently managing the replacement of the different materials, preserving their regeneration.

The crossing velocity under maximum flow conditions in filter elements 61 can vary from 0.10 m/s to 0.25 m/s, while the contact time of the effluent flow with the filter elements can vary from 1 to 3 seconds (under maximum flow conditions).

Preferably, each filter element 61 is provided with an inlet, which is separated from the next one by a shaped diaphragm, sloping towards a condensate discharge point; the condensate discharge points are connected to a suitable reservoir.

Preferably, the adsorbent material is loaded from the top by gravity, using suitable manholes provided at the top of the filter, while the discharge is from the bottom, again by gravity, through discharge flanges.

According to a preferred embodiment, manual adjustment shutters are provided, which advantageously allow the exclusion of one of the filter elements 61, in order to easily perform maintenance work or material replacement; in these cases, the filters that remain operational will still guarantee effective treatment of the effluent.

The plant 100 can advantageously be equipped with a control station 70, arranged along the delivery conduit line 10 preferably downstream of the second cooling station 50. Said control station 70 comprises an absolute humidity meter 71 and/or a temperature detector 72, respectively configured to measure the absolute humidity and temperature of the cooled aeriform effluent F₂, flowing through control station 70 itself.

The plant 100 further comprises a control unit 90 configured to receive at least from the absolute humidity meter 71 the values measured by it and process them to adjust various process parameters accordingly, such as for example the flow rate of the hot heating water used in the post-heating step, and/or the flow rate of the aeriform effluent F at the inlet to the plant. According to a preferred configuration of the plant 100 according to the invention, as shown in Fig. 1, the control unit is arranged in the control station 70.

According to these preferred configurations, the plant 100 can be advantageously adapted to the characteristics of the effluent to be purified, even during the treatment process.

The plant 100 further comprises at least a first ventilation device (not shown in the figures) configured to draw in the aeriform effluent F from the combustion station 20 and convey it into the delivery conduit line 10, so that it can flow from the combustion station 20 to the different stations 20, 40, 50, 60 and 70 arranged in succession. Preferably said ventilation device consists of at least one fan.

Having described the structure of the plant 100, a method 900 for treating an aeriform effluent according to an embodiment of the present invention is now described.

The method 900 according to the present invention provides for carrying out at least one basification 901 of the aeriform effluent F by means of basifying agents in a basification station 30 comprising one or more basification substations 31, 32. Preferably, the basification station 30 is configured so as to obtain a flow of at least partially de-acidified aeriform effluent F₀, output from the basification station itself.

The method 900 also provides for at least one first cooling 902 in a first cooling station 40 comprising at least one air heat exchanger 41. Preferably, said first cooling operation 902 is conducted at essentially atmospheric pressure.

Preferably, the first cooling station 40 is configured to obtain a first condensate fraction C₁ and a partially cooled aeriform effluent flow F₁ having a temperature not exceeding 75°C.

Advantageously, the air heat exchanger 41 operates through an aeriform service fluid which is supplied to the air heat exchanger 41 itself at a temperature comprised between 10°C and 40°C, preferably about 20°C, and is configured to obtain a partially cooled aeriform effluent flow F₁ at the outlet having a temperature comprised between about 60°C and about 70°C. According to a preferred embodiment, the aeriform service fluid has a temperature comprised between 70°C and 90°C at the outlet section of the air heat exchanger 41.

In this way, it is possible to produce a flow of approximately 70-75,000 Emc/h of service fluid, for every 30000 Nm³/h of effluent to be treated, at the outlet from the heat exchanger 41, which can be advantageously channelled and reused to serve further processing stations, and/or for heating spaces, leading to significant energy recovery as well as even lower environmental impact.

The method 900 therefore provides for at least one second cooling operation 903 in a second cooling station 50 comprising at least one liquid heat exchanger 51.

The liquid heat exchanger 51 is configured to cool the at least partially de-acidified aeriform effluent F₀ flowing through it to a temperature less than or equal to the dew point, so as to lead to the formation of condensate, which will be the greater the lower the temperature of the effluent flow obtained at the end of the cooling process carried out by the air exchanger 41.

Preferably, the liquid heat exchanger 51 is configured so as to obtain a second condensate fraction C₂ and a cooled aeriform effluent flow F₂ having a temperature not exceeding 50°C.

Additionally, the liquid heat exchanger 51 is configured to obtain a flow of cooled aeriform effluent F₂ with a relative humidity (RH) not exceeding 60%. Additionally, the plant 100 and method 900 enable condensate formation and recovery for various substances contained in the treated effluent, such as sulphuric, hydrochloric, hydrofluoric, acetic and formic acid as well as sulphur dioxide.

The method 900 further provides for performing at least one adsorption operation 904 in an adsorption station 60 comprising at least one filter element 61.

The invention thus conceived is susceptible to several modifications and variations, all falling within the scope of protection defined by the appended claims.

## Claims

1. Plant (100) for treating an aeriform effluent comprising:
- a delivery conduit line (10) configured to transport an aeriform effluent (F) coming from a combustion station (20) to one or more processing stations arranged in succession;
- at least one basification station (30) arranged along said delivery conduit line (10) and configured to perform a first basification of the aeriform effluent (F);
- a first cooling station (40) arranged along said delivery conduit line (10) downstream of said basification station (30) and comprising at least one air heat exchanger (41) configured to perform a cooling of the aeriform effluent to a temperature not exceeding 75°C;
- a second cooling station (50) arranged along said delivery conduit line (10) downstream of said first cooling station (40) and comprising at least one liquid heat exchanger (51) configured to perform a cooling of the effluent to a temperature not exceeding 50°C;
- at least one adsorption station (60) arranged along said delivery conduit line (10) downstream of said second cooling station (50) and comprising at least one filter element (61) configured to perform an adsorption on the aeriform effluent.

2. Plant (100) for treating an aeriform effluent according to claim 1, comprising a control station (70) arranged along the delivery conduit line (10) downstream of said second cooling station (50) and comprising an absolute humidity meter (71) and/or a temperature detector (72).

3. Plant (100) for treating an aeriform effluent according to claim 1 or 2 wherein said air heat exchanger (41) comprises an inlet (41') for the inlet of an aeriform service fluid (F_{SA}) having a temperature less than or equal to 40°C, and an outlet (41") for the outlet of said aeriform service fluid (F_{SA}) having a temperature between 70°C and 90°C at said outlet (41").

4. Plant (100) for treating an aeriform effluent according to one or more of the preceding claims wherein said liquid heat exchanger (51) is supplied with a service fluid in a liquid state (F_{SL}), which service fluid consists of water, or of one or more glycols, or of a mixture of water and one or more glycols.

5. Plant (100) for treating an aeriform effluent according to claim 4 wherein said liquid heat exchanger (51) is provided with an inlet (51') for inlet of the service fluid in the liquid state (F_{SL}) having a temperature between 2°C and 10°C, and an outlet (51") for the outlet of said service fluid in the liquid state (F_{SL}) having a temperature between 10°C and 20°C at said outlet (51").

6. Plant (100) for treating an aeriform effluent according to one or more of the preceding claims wherein said basification station (30) comprises at least one first basification substation (31) comprising at least one bag filter (31') in which alkaline powder is employed.

7. Plant (100) for treating an aeriform effluent according to claim 6 wherein said alkaline powder comprises calcium hydroxide or one or more bicarbonate salts.

8. Plant (100) for treating an aeriform effluent according to claim 6 or 7 wherein said first basification station (30) comprises at least one second liquid-based basification substation (32) arranged downstream of said first basification substation (31), said second basification substation (32) comprising one or more spray nozzles configured to spray a de-acidifying agent in liquid form onto said aeriform effluent (F).

9. Plant (100) for treating an aeriform effluent according to claim 8 wherein said de-acidifying agent in liquid form is an aqueous solution of KOH, preferably having a volume percentage composition of KOH between 0.5% and 8% by weight.

10. Plant (100) for treating an aeriform effluent according to one or more of the preceding claims wherein said first cooling station (40) comprises a first condensate separator (42) and said second cooling station (50) comprises a second condensate separator (52), and wherein said first condensate separator (42) and second condensate separator (52) consist of a demister.

11. Method (900) for treating an aeriform effluent (F) comprising:
- perform at least one basification (901) of the aeriform effluent (F) by means of basifying agents in a basification station (30) comprising one or more basification substations (31, 32), said basification station (30) being configured so as to obtain an at least partially de-acidified aeriform effluent flow (F₀), output from the basification station;
- perform at least one first cooling (902) in a first cooling station (40) comprising at least one air heat exchanger (41), configured so as to obtain a first condensate fraction (C₁) and a partially cooled aeriform effluent flow (F₁) having a temperature not exceeding 75°C;
- perform at least one second cooling (903) in a second cooling station (50) comprising at least one liquid heat exchanger (51), configured so as to obtain a second condensate fraction (C₂) and a cooled aeriform effluent flow (F₂) having a temperature not exceeding 50°C;
- perform at least one adsorption (904) in an adsorption station (60) comprising at least one filter element (61).

12. Method according to claim 11, comprising measuring (905) the absolute humidity of said cooled aeriform effluent flow (F₂) and performing an adjustment operation (906) through a control station (70) of at least one of:
- the temperature of a liquid state service fluid (F_{SL}) employed in the second cooling station (50);
- the temperature of an aeriform service fluid (F_{SA}) employed in the first cooling station (40);
- the flow rate of the aeriform effluent (F) entering the plant;
prior to performing at least one adsorption (904).
